(19) **Europäisches Patentamt / European Patent Office / Office européen des brevets**

(11) **EP 1 578 622 B1**

(12) **FASCICULE DE BREVET EUROPEEN**

(45) Date de publication et mention
de la délivrance du brevet:
**26.05.2010 Bulletin 2010/21**

(21) Numéro de dépôt: **03782467.9**

(22) Date de dépôt: **19.12.2003**

(51) Int Cl.:
**B60C 15/04** *(2006.01)* **B60C 15/00** *(2006.01)*
**B60C 19/00** *(2006.01)*

(86) Numéro de dépôt international:
**PCT/EP2003/014652**

(87) Numéro de publication internationale:
**WO 2004/056589 (08.07.2004 Gazette 2004/28)**

(54) **PNEUMATIQUE POUR AVION**

LUFTREIFEN FÜR FLUGZEUG

AIRCRAFT TYRE

(84) Etats contractants désignés:
**AT BE BG CH CY CZ DE DK EE ES FI FR GB GR HU IE IT LI LU MC NL PT RO SE SI SK TR**

(30) Priorité: **23.12.2002 FR 0216689**

(43) Date de publication de la demande:
**28.09.2005 Bulletin 2005/39**

(73) Titulaires:
• **Société de Technologie Michelin
63000 Clermont-Ferrand (FR)**
• **Michelin Recherche et Technique S.A.
1763 Granges-Paccot (CH)**

(72) Inventeur: **MONNERIE, Christian
F-63000 Clermont-Ferrand (FR)**

(74) Mandataire: **Le Cam, Stéphane Georges Elie
M.F.P. Michelin,
SGD/LG/PI - F 35 - Ladoux
63040 Clermont-Ferrand Cedex 09 (FR)**

(56) Documents cités:
**WO-A-02/00452 WO-A-02/00456
US-A- 5 702 548**

Printed by Jouve, 75001 PARIS (FR)

## Description

L'invention concerne un pneumatique d'avion. Les pneumatiques d'avion se singularisent notamment par la combinaison de pression de gonflage supérieure à 9 bars et d'une flèche relative supérieure à 30%.

La flèche d'un pneumatique est définie par la déformation radiale du pneumatique, ou variation de la hauteur radiale, lorsque celui-ci passe d'un état non chargé à un état chargé en statique, dans des conditions de charge et de pression nominales.

Elle est exprimée sous la forme d'une flèche relative, définie par le rapport de cette variation de la hauteur radiale du pneumatique sur la moitié de la différence entre le diamètre extérieur du pneumatique et le diamètre maximum de la jante mesuré sur le crochet. Le diamètre extérieur du pneumatique est mesuré en statique dans un état non chargé à la pression nominale.

L'armature de renforcement ou renforcement des pneumatiques et notamment des pneumatiques d'avion est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

Dans ce qui suit, on entend par titre, la masse en grammes de mille mètres d'un renfort. Le titre est exprimé en tex. La contrainte subie par un renfort ou le module de ce renfort sont exprimés en « cN/tex », cN voulant dire centi-newton.

On entend par « axiale » une direction parallèle à l'axe de rotation du pneumatique ; cette direction peut être « axialement intérieure » lorsqu'elle est dirigée vers l'intérieur du pneumatique et « axialement extérieure » lorsqu'elle est dirigée vers l'extérieur du pneumatique.

On entend par « radiale » une direction perpendiculaire à l'axe de rotation du pneumatique et passant par cet axe de rotation. Cette direction peut être « radialement intérieure » ou « radialement extérieure » selon qu'elle se dirige vers l'axe de rotation ou vers l'extérieur du pneumatique.

On entend par « module d'élasticité » d'un mélange caoutchouteux, un module sécant d'extension à 10 % de déformation et à température ambiante.

En ce qui concerne les fils ou câbles métalliques, les mesures de force à la rupture (charge maximale en N), de résistance à la rupture (en MPa) et d'allongement à la rupture (allongement total en %) sont effectuées en traction selon la norme ISO 6892 de 1984.

En ce qui concerne les compositions de caoutchouc, les mesures de module sont effectuées en traction selon la nonne AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

En ce qui concerne les fils ou câbles textiles, les propriétés mécaniques sont mesurées sur des fibres ayant été soumises à un conditionnement préalable. Par "conditionnement préalable", on entend le stockage des fibres pendant au moins 24 heures, avant mesure, dans une atmosphère standard selon la norme européenne DIN EN 20139 (température de 20 ± 2°C ; hygrométrie de 65 ± 2 %). Les propriétés mécaniques en extension (ténacité, module, allongement et énergie à la rupture) sont mesurées de manière connue à l'aide d'une machine de traction ZWICK GmbH & Co (Allemagne) de type 1435 ou de type 1445. Les fibres, après avoir reçu une faible torsion de protection préalable (angle d'hélice de 6° environ), subissent une traction sur une longueur initiale de 400 mm à une vitesse nominale de 200 mm/min. Tous les résultats sont une moyenne de 10 mesures.

Le brevet US 4,832102 décrit un pneumatique d'avion comprenant un sommet, deux flancs et deux bourrelets, une armature de carcasse et une armature de sommet dans lequel l'armature de carcasse comprend deux alignements circonférentiels de renforts de haut module d'élasticité, ancrés dans les deux bourrelets, et l'armature de sommet comprend au moins un bloc de travail avec au moins une nappe de renforts de haut module d'élasticité. L'armature de carcasse est ancrée dans les bourrelets par le retournement, autour d'une tringle, des deux alignements circonférentiels de premiers renforts de haut module d'élasticité.

L'invention a pour objet un pneumatique pour avion dont l'ancrage de l'armature de carcasse est réalisé par des éléments de renforcement disposés circonférentiellement conformément à des techniques de fabrication des pneumatiques du type sur noyau toroïdal.

Le brevet WO 02/00456 a ainsi déjà décrit des pneumatiques pour avion dont l'armature de carcasse comprend deux ou trois alignements circonférentiels d'éléments de renforcement de haut module d'élasticité et des moyens d'ancrage desdits éléments de renforcement, constituant l'armature de carcasse, dans chaque bourrelet. Les moyens d'ancrage selon ce document sont constitués de fils orientés circonférentiellement bordant axialement les alignements circonférentiels des éléments de renforcement de l'armature de carcasse, lesdits éléments de renforcement de l'annature de carcasse et les fils orientés circonférentiellement étant séparés par un mélange caoutchouteux de liaison de très haut module d'élasticité. L'utilisation de fils, permet d'obtenir une rigidité satisfaisante avec un encombrement du bourrelet le plus réduit possible ; la compacité du bourrelet est primordiale pour les pneumatiques avion pour réduire les conséquences de l'échauffement desdits bourrelets.

Les pneumatiques pour avion doivent résister à des conditions en service extrêmes, notamment en termes de charge appliquée et de vitesse compte tenu de leur poids et de leur taille faibles. Il en résulte, en dépit de leurs pressions de gonflage très élevées, supérieures à 9 bars, que leur écrasement ou flèche en service peut atteindre couramment des valeurs doubles de celles observées pour des pneumatiques poids lourds ou de tourisme.

Lors des décollages, des vitesses très élevées, de l'ordre de 350 km/heure voire 450 km/heure, sont atteintes d'où des conditions d'échauffement aussi très sévères.

Toutes ces conditions sont particulièrement pénalisantes pour l'endurance des bourrelets de ces pneumatiques.

La substitution dans le pneumatique d'un ancrage de l'armature de carcasse avec un retournement autour d'une tringle par un ancrage au moyen de fils de renforcement circonférentiels couplés aux éléments de renforcement de l'armature de carcasse par une couche de mélange de haut module d'élasticité n'entraîne pas de déchéance de ladite structure au contraire.

Les inventeurs se sont donnés pour mission d'améliorer les rendements de production des pneumatiques d'avion réalisés selon des techniques du type sur noyau toroïdal et notamment de faciliter la pose à cru et d'améliorer la tenue des éléments de renforcement disposés circonférentiellement pour former la zone d'ancrage de l'armature de carcasse.

Ce but a été atteint selon l'invention par un pneumatique d'avion dont la pression de gonflage est supérieure à 9 bars comprenant un sommet, deux flancs et deux bourrelets, une armature de carcasse ancrée dans les deux bourrelets et une armature de sommet, dans lequel l'armature de carcasse comprend au moins un, et de préférence au moins deux, alignements circonférentiels d'éléments de renforcement de haut module d'élasticité et dans lequel les moyens d'ancrage, desdits éléments de renforcement, dans chaque bourrelet comprennent des éléments de renforcement orientés circonférentiellement bordant axialement lesdits alignements circonférentiels desdits éléments de renforcement constituant l'armature de carcasse, lesdits éléments de renforcement constituant l'armature de carcasse et lesdits éléments de renforcement orientés circonférentiellement étant séparés par un mélange caoutchouteux de liaison de très haut module d'élasticité, lesdits éléments de renforcement orientés circonférentiellement étant des câbles, lesdits câbles présentant une aptitude à la pénétration comprise entre 80 et 100%, la force rupture desdits câbles étant supérieure à 150 daN et lesdits câbles présentant un allongement à la rupture supérieur à 4%.

Les éléments de renforcement constituant l'armature de carcasse peuvent être tout type d'éléments de renforcement sous forme filaire, susceptible de renforcer une matrice déterminée, par exemple une matrice de caoutchouc. A titre d'éléments de renforcement, on citera par exemple des fibres multifilamentaires (« multifilament yarns »), ces fibres pouvant être tordues ou non sur elles-mêmes, des fils unitaires tels que des monofils cylindriques ou oblongs, avec ou sans torsion sur eux-mêmes, des câblés ou des retors (« cords ») obtenus par des opérations de câblage ou retordage de ces fils unitaires ou de ces fibres, de tels éléments de renforcement pouvant être hybrides, c'est-à-dire composites, comportant des éléments de natures différentes.

On entend par « retors » (« plied yarn » ou « folded yarn ») un élément de renforcement constitué par deux brins (« single yarns ») ou plus assemblés ensemble par des opérations de retordage ; ces brins, généralement formés de fibres multifilamentaires, sont d'abord retordus individuellement dans un sens (direction de torsion S ou Z) au cours d'une première étape de retordage, puis tordus ensemble en sens inverse (direction de torsion Z ou S, respectivement) au cours d'une seconde étape de retordage.

L'aptitude à la pénétration selon l'invention est l'aptitude que présente la gomme à pénétrer les zones libres d'un câble, c'est-à-dire les zones ne comportant pas de matière ; elle est exprimée en pourcentage desdites zones libres occupées par de la gomme après cuisson et déterminée par un test de perméabilité à l'air.

Ce test de perméabilité à l'air permet de mesurer un indice relatif de perméabilité à l'air. Il constitue un moyen simple de mesure indirecte du taux de pénétration du câble par une composition de caoutchouc. Il est réalisé sur des câbles extraits directement, par décorticage, des nappes de caoutchouc vulcanisées qu'ils renforcent, donc pénétrés par le caoutchouc cuit.

Le test est réalisé sur une longueur de câble déterminée (par exemple 2 cm) de la manière suivante : on envoie de l'air à l'entrée du câble, sous une pression donnée (par exemple 1 bar), et on mesure la quantité d'air à la sortie, à l'aide d'un débitmètre ; pendant la mesure l'échantillon de câble est bloqué dans un joint étanche de telle manière que seule la quantité d'air traversant le câble d'une extrémité à l'autre, selon son axe longitudinal, est prise en compte par la mesure. Le débit mesuré est d'autant plus faible que le taux de pénétration du câble par le caoutchouc est élevé.

De façon surprenante, la demanderesse a constaté que le fait d'avoir remplacé, dans le pneumatique selon l'invention, un ancrage de l'armature de carcasse au moyen de fils circonférentiels couplés aux renforts de l'armature de la carcasse par l'intermédiaire d'un mélange caoutchouteux de liaison de très haut module d'élasticité, par un ancrage au moyen de câbles tels que définis précédemment permet d'améliorer le rendement du procédé de fabrication. En outre, il apparaît que l'utilisation des câbles définis selon l'invention permet de conserver une compacité des bourrelets du pneumatique pour une rigidité satisfaisante pour les applications considérées.

En effet, il apparaît que le choix de câbles présentant une aptitude à la pénétration telle que décrite autorise un accrochage à cru des câbles dans la zone du bourrelet de manière satisfaisante sans risque de voir les dits câbles se détacher même partiellement durant les étapes de fabrication du pneumatique ultérieure qui sont réalisées avant la cuisson dudit pneumatique.

Par ailleurs, les valeurs d'allongement à la rupture autorisent une optimisation de l'efficacité du travail des câbles. En effet, selon les techniques de fabrication sur noyau toroïdal, les câbles sont enroulés circonférentiellement pour former plusieurs spires radialement concentriques autorisant un meilleur ancrage entre les câbles et les éléments de renforcement de l'armature de carcasse. Les valeurs d'allongement à rupture des câbles selon l'invention autorisent une déformation desdits câbles qui conduit à un rendement d'efficacité desdites spires plus important. En d'autres termes, la déformation desdits câbles selon l'invention permet d'obtenir une répartition plus homogène, selon la longueur d'enroulement, des contraintes supportées par un même enroulement d'un tel câble qui ne présente pas lesdites caractéristiques d'allongement.

En conséquence, la combinaison de l'allongement à la rupture des câbles et de leur force rupture selon l'invention permet de conserver une compacité du bourrelet satisfaisante pour les applications visées.

Selon une réalisation préférée de l'invention, la force rupture des câbles est inférieure à 400 daN. Une force rupture supérieure à une telle valeur peut conduire, notamment dans le cas d'une valeur de force rupture globale du bourrelet fixée et d'un diamètre de câbles imposés, à une diminution du nombre de tours desdits câbles et donc à une diminution de la hauteur d'ancrage entre les éléments de renforcement de la structure de carcasse et des câbles orientés circonférentiellement. Une telle diminution de la hauteur d'ancrage peut être préjudiciable à la qualité dudit ancrage. Par ailleurs, si l'augmentation de la force rupture des câbles est combinée à une augmentation du diamètre desdits câbles, cela peut engendrer des problèmes d'encombrement notamment en terme d'élargissement de la zone basse.

De préférence encore, l'allongement à la rupture des câbles est inférieur à 8%. Un allongement supérieur pourrait conduire à des pneumatiques dont la rigidité des bourrelets, pour des pressions élevées, n'est pas suffisante pour garantir la tenue dudit pneumatique sur une jante et pour garantir la transmission des couples freineurs.

Les valeurs d'allongement à la rupture des câbles selon l'invention sont avantageusement obtenues par des traitements thermiques des câbles qualifiés de traitement « grand allongement ». De tels traitements connus de l'homme du métier sont par exemple décrits dans le brevet européen EP 0 751 015.

Selon un mode de réalisation avantageux de l'invention, les câbles selon l'invention comportent un revêtement adhérisant classique tel qu'un revêtement en laiton de façon à améliorer l'adhérence entre lesdits câbles et les mélanges caoutchouteux.

Selon une réalisation préférée de l'invention, le mélange caoutchouteux de liaison de très haut module d'élasticité a un module sécant d'extension à 10 % supérieur à 20 MPa et de préférence supérieur à 30 MPa. Cette couche peut aussi avoir une dureté shore A supérieure à 70.

Selon une réalisation avantageuse de l'invention, les éléments de renforcement constituant l'armature de carcasse présentent sont, par exemple, constitués de polyamide aromatique ou d'éléments de renforcement tels que ceux décrits dans la demande de brevet WO 02/085646. Il peut s'agir de fils ou de câbles.

Avantageusement encore, l'armature de carcasse des pneumatiques selon l'invention comprend deux ou trois alignements circonférentiels d'éléments de renforcement.

Deux alignements circonférentiels sont nécessaires pour résister aux très fortes sollicitations mécaniques subies, mais il est préférable de ne pas dépasser trois alignements pour ne pas augmenter de façon dommageable la rigidité en flexion des flancs.

De façon avantageuse, chaque alignement circonférentiel de l'armature de carcasse est, dans chaque bourrelet, bordé axialement intérieurement et axialement extérieurement par des câbles orientés circonférentiellement.

Les câbles orientés circonférentiellement ont, de préférence, un module d'extension supérieur à celui des éléments de renforcement de l'armature de carcasse. Ils sont préférentiellement choisis dans le groupe des renforts de carbone, de tungstène, d'aramide haut module ou d'acier.

Selon une autre caractéristique du pneumatique selon l'invention, en considérant $\Sigma R_I$ somme des rigidités d'extension des câbles orientés circonférentiellement disposés axialement intérieurement relativement à l'armature de carcasse et en considérant $\Sigma R_E$ somme des rigidités d'extension des câbles orientés circonférentiellement disposés axialement de part et d'autre de l'armature de carcasse, on a :

$$0,6 \le \frac{\sum R_I}{\sum R_E} \le 1,5$$

et de préférence :

$$0,7 \le \frac{\sum R_I}{\sum R_E} \le 1,3$$

Le respect de ces limites pour le rapport entre la rigidité totale d'extension des câbles orientés circonférentiellement disposés à l'intérieur de l'armature de carcasse dans chaque bourrelet et la rigidité totale d'extension des câbles orientés circonférentiellement disposés à l'extérieur de l'armature de carcasse a l'avantage de rendre plus homogène la sollicitation des câbles orientés circonférentiellement dans le bourrelet, quelle que soit leur position.

Selon une autre caractéristique préférentielle de l'invention, la surface extérieure du bourrelet du pneumatique selon l'invention comportant un siège suivi d'une paroi tronconique d'orientation sensiblement radiale adjacente radialement intérieurement à une paroi de section droite sensiblement en arc de cercle et de centre C disposé extérieurement relativement au bourrelet, ces parois étant destinées à s'appuyer contre le crochet et le rebord d'une jante adaptée, en considérant une ligne CD, traversant le bourrelet du pneumatique en faisant un angle $\alpha$ = +45 $\pm$ 5 degrés relativement à l'axe A du pneumatique, l'ensemble des câbles orientés circonférentiellement est disposé à une distance radiale de l'axe du pneumatique inférieure ou égale à cette ligne CD. Cette ligne CD définit sensiblement une zone d'encastrement, très rigide, où les déformations sont très réduites et une zone de flexion radialement au-dessus de CD. Le fait que tous les câbles orientés circonférentiellement se trouvent dans la zone d'encastrement renforce l'endurance du bourrelet.

De préférence, le bourrelet du pneumatique selon l'invention ayant une surface extérieure destinée à venir en contact avec la surface correspondante du siège et du crochet de la jante, après montage sur ladite jante et gonflage du pneumatique, la zone de contact entre la surface extérieure du bourrelet et la jante s'étend au moins jusqu'au point B du crochet de rayon maximum $R_J$.

Avantageusement, $\Phi$ étant le diamètre de la circonférence de la surface extérieure du bourrelet destinée à venir s'appuyer contre la circonférence du crochet de la jante de rayon maximum $R_J$, on a :

$$\Phi = 2(R_J - \varepsilon)$$

avec ε compris entre 0,5 et 2 mm.

Cela permet au bourrelet de bien venir « s'asseoir » sur le siège et le crochet de la jante et a pour avantage de limiter la courbure prise par les alignements circonférentiels de l'armature de carcasse lors du roulage, particulièrement dans l'aire de contact.

Selon un mode de réalisation avantageux, les éléments de renforcement de l'armature de carcasse forment des allers et retours disposés de façon adjacente, avec, au niveau de chaque bourrelet, des boucles reliant chaque fois un aller à un retour.

L'armature de sommet du pneumatique pour avion selon l'invention comprend de préférence au moins un bloc de travail avec une ou plusieurs couches d'éléments de renforcement parallèles dans chaque couche, orientés sensiblement circonférentiellement ; il s'agit avantageusement d'éléments de renforcement constitués de polyamide aromatique, ou d'éléments de renforcement tels que ceux décrits dans la demande de brevet WO 02/085646.

On entend par « orientation sensiblement circonférentielle » une orientation ne s'écartant pas de plus de cinq degrés de la direction circonférentielle.

Si nécessaire, l'armature de sommet comprenant une zone centrale et deux zones latérales, le bloc de travail comprend en plus au moins deux couches d'éléments de renforcement, orientés sensiblement circonférentiellement, disposées axialement de part et d'autre du plan médian du pneumatique dans les zones latérales dudit sommet. Ces couches permettent de supporter les efforts dus à la centrifugation à haute vitesse. Elles sont de préférence disposées radialement intérieurement relativement aux deux couches d'éléments de renforcement orientés circonférentiellement du bloc de travail. Ces deux couches de renforcement ont l'avantage d'augmenter le frettage des zones latérales du sommet sans augmenter son épaisseur.

L'armature de sommet peut encore comprendre en plus au moins deux couches d'éléments de renforcement, parallèles entre eux dans chaque couche et croisés d'une couche à la suivante en faisant avec la direction circonférentielle un angle α, compris entre 5° et 35° pour renforcer la rigidité de dérive du pneumatique. Les éléments de renforcement sont par exemple des éléments de renforcement tels que ceux décrits dans la demande de brevet WO 02/085646.

L'armature de sommet peut aussi comprendre, disposée radialement extérieurement relativement au bloc de travail, une couche sommet de protection. Cette couche de protection s'étend de préférence axialement au-delà de la largeur axiale des couches d'éléments de renforcement d'orientation circonférentielle.

D'autres détails et caractéristiques avantageux de l'invention ressortiront ci-après de la description d'exemples de réalisations de l'invention en références aux figures 1 à 6 qui représentent :

- figure 1, une vue schématique en section axiale d'un pneumatique selon l'invention,
- figure 2, une représentation schématique d'une vue en coupe d'un câble selon l'invention,
- figure 3, une vue schématique en perspective montrant la disposition d'une partie des renforts de l'armature de carcasse,
- figure 4, une représentation schématique d'un bourrelet selon un deuxième mode de réalisation de l'invention,
- figure 5, une vue schématique en section axiale d'un pneumatique selon une variante de réalisation de l'invention représentée sur la figure 1,
- figure 6, une vue schématique en section axiale d'un pneumatique selon une autre variante de réalisation de l'invention représentée sur la figure 1.

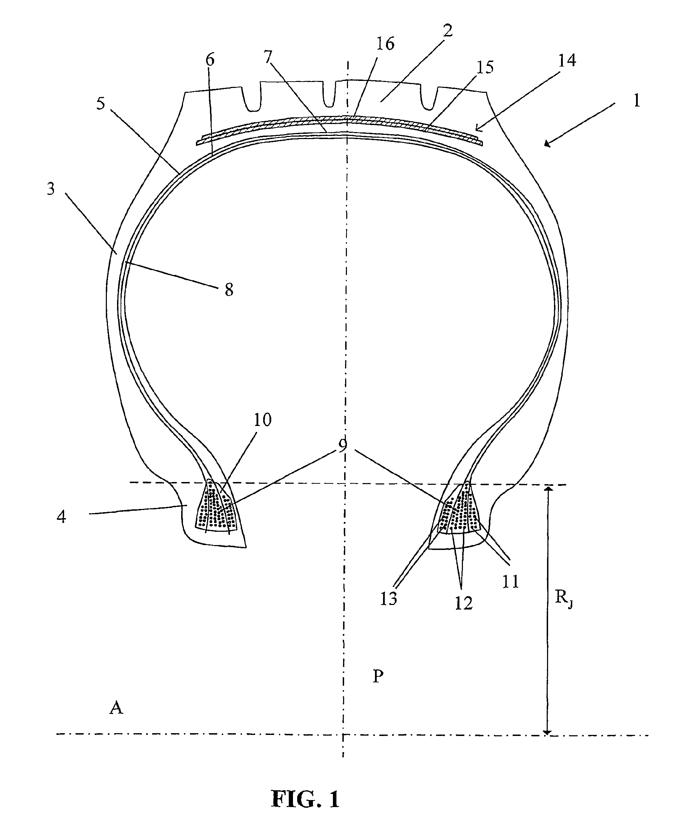

Les figures 1 à 6 ne sont pas représentées à l'échelle pour en simplifier la compréhension.

Le pneumatique 1 d'avion représenté schématiquement en demi-coupe axiale sur la figure 1 comprend un sommet 2, deux flancs 3 et deux bourrelets 4. Une armature de carcasse 5 s'étend d'un bourrelet 4 à l'autre et est constituée de deux alignements circonférentiels 6 et 7 d'éléments de renforcement. Les alignements circonférentiels des éléments de renforcement 6 et 7 sont orientées radialement dans les flancs 3 et sont constituées d'éléments de renforcement en polyamide aromatique ou aramide. Les éléments de renforcement sont disposés parallèlement et sont séparés par une couche de mélange 8 dont la nature et le module sont adaptés en fonction de leur position dans le pneumatique.

L'ancrage des deux alignements circonférentiels 6 et 7 est assuré dans les bourrelets 3 par des alignements ou « piles » 9 de câbles enroulés orientés circonférentiellement et disposés axialement de part et d'autre de chaque alignement circonférentiel des éléments de renforcement 6 et 7. Chaque alignement ou pile 9 de câbles orientés circonférentiellement peut être obtenue par enroulement hélicoïdal d'un câble. Les éléments de renforcement radiaux de l'armature de carcasse et les câbles orientés circonférentiellement sont séparés les uns des autres par un mélange caoutchouteux de liaison 10 de très haut module d'élasticité pour éviter tout contact direct d'un élément de renforcement avec un autre. Ce mélange caoutchouteux de liaison 10 a une dureté shore A supérieure à 70. Son module sécant d'extension à 10 % peut aussi être supérieur à 20 MPa et de préférence à 30 MPa. La tension qui se développe dans les éléments de renforcement radiaux lors du gonflage du pneumatique 1 est reprise notamment par l'adhésion latérale entre chaque alignement circonférentiel 6 et 7 et les piles 9 de câbles orientés circonférentiellement. Cette structure de bourrelet assure un excellent ancrage qui reste très efficace même pour les pressions de gonflage très élevées des pneumatiques d'avion, supérieures à 12 bars et pouvant atteindre 25 bars dans certaines applications particulières.

Les piles 9 de câbles orientés circonférentiellement sont réparties en trois groupes, deux piles 11 disposées axialement extérieurement à l'armature de carcasse 5 du côté extérieur du pneumatique, deux piles 13 disposées axialement intérieurement relativement à l'armature de carcasse 5, du côté intérieur du pneumatique et 4 piles 12 disposées entre les deux alignements circonférentiels 6 et 7 de l'armature de carcasse 5.

L'invention peut encore prévoir la mise en place des cônes de mélanges caoutchouteux axialement entre l'armature de carcasse et les piles 9 de câbles orientés circonférentiellement pour autoriser une mise en place des câbles orientés circonférentiellement telle que la distance axiale entre ceux-ci et l'armature de carcasse augmente selon la direction radiale. Cette variante de réalisation n'est pas illustrée sur les figures. Une telle mise en place des câbles a été décrite dans la demande français FR 0209355.

Dans le cas du pneumatique décrit, en considérant le nombre de spires disposées intérieurement et extérieurement relativement à l'armature de carcasse, on obtient : $\Sigma R_I/\Sigma R_E \cong 1{,}24$.

Cela a l'avantage d'homogénéiser la sollicitation mécanique des câbles orientés circonférentiellement dans le bourrelet.

On peut aussi noter que le nombre de spires des piles diminue progressivement avec la distance relativement à l'axe de rotation A du pneumatique 1. Il en résulte une forme sensiblement conique de la disposition des câbles orientés circonférentiellement. Cela a pour avantage de stabiliser fortement les bourrelets 4 lors du gonflage du pneumatique et lors du passage dans l'aire de contact en service.

L'ensemble des spires des piles 9 est noyé dans le mélange caoutchouteux 10 de très haut module d'élasticité pour assurer une bonne reprise des efforts dus à la pression de gonflage et ainsi un excellent ancrage de l'armature de carcasse dans les bourrelets 4.

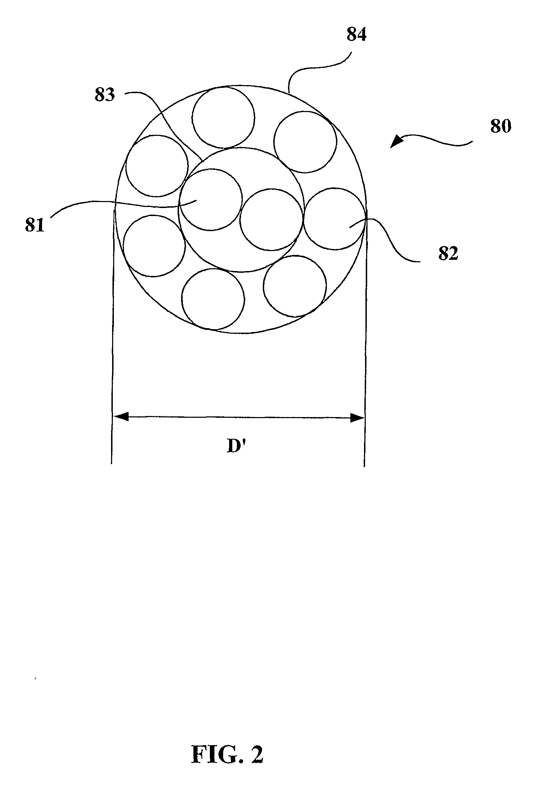

La figure 2 illustre un câble 80 utilisé, selon l'invention, en enroulement circonférentiel comme moyen d'ancrage des éléments de renforcement de l'armature de carcasse. Le câble 80 est un câble à couches de formule 9.35, c'est-à-dire constitué de 9 fils élémentaires de diamètre égal à 35/100 mm ; le câble 80 répond à la formule 2 + 7 avec 2 fils 81, constituant la première couche, tordus ensemble pour former un retors, et 7 fils 82, formant la couche externe, enroulés ensemble en hélice autour de la première couche. La figure 2 illustre cet enroulement en représentant les 7 fils 82 au contact du cercle 83 schématisant l'espace occupé par le retors formé des 2 fils 81 de la première couche. Les fils 81, 82 sont en acier avec une teneur en carbone comprise entre 0.7 et 0.9%. Les fils ont été préalablement traités pour comporter un revêtement en laiton favorisant l'adhésion du fil sur le caoutchouc. Les fils présentent un taux d'écrouissage inférieur à 3.5. Le câble présent un diamètre total D', correspondant au diamètre du cercle circonscrit 84 à la couche externe, égal à 1.35 mm. La mesure de l'aptitude à la pénétration de ce câble faite selon la méthode décrite précédemment à conduit à une valeur de 100%. La force rupture du câble est égale à 198 daN et son allongement à la rupture de 5.4%. L'allongement à la rupture est obtenu après un traitement thermique tel que celui précité ; le traitement thermique permet d'augmenter les allongements élastique et plastique qui viennent s'ajouter à l'allongement structurel. Ce dernier est égal à 0.1% pour le câble 80 de formule 9.35.

Un autre câble à couches, de formule 13.35, a été testé ; ce câble est constitué de 13 fils élémentaires de diamètre égal à 35/100 mm et de formule 4 + 9, avec 4 fils, constituant la première couche, tordus ensemble pour former un retors, et 9 fils, formant la couche externe, enroulés ensemble en hélice autour de la première couche. Les fils élémentaires sont les mêmes que dans le cas précédent. La mesure de l'aptitude à la pénétration de ce câble faite selon la méthode décrite précédemment à conduit à une valeur de 80%. La force rupture du câble est égale à 282 daN et son allongement à la rupture de 6.4%. A noter que l'allongement structurel de ce câble de formule 13.35 est de 0.2%.

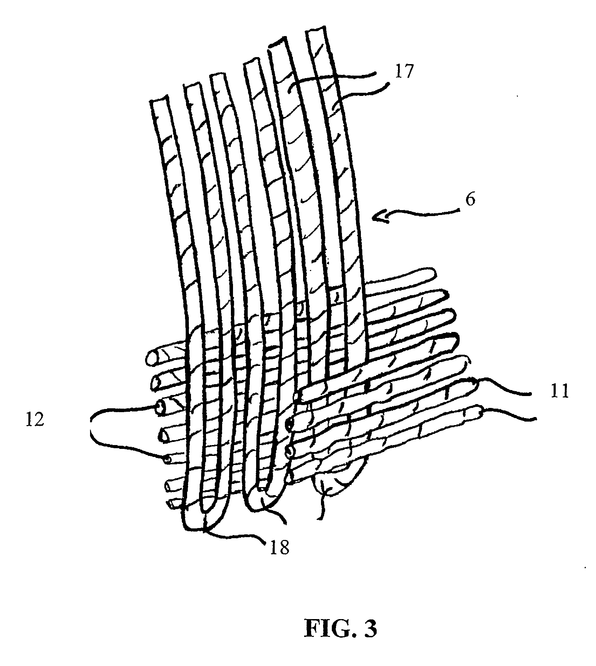

La figure 3 est une vue en perspective de l'un des alignements circonférentiels des éléments de renforcement, l'alignement 6, dans laquelle seuls les éléments de renforcement sont représentés. Sur cette figure 3, on voit l'alignement circonférentiel 6 des éléments de renforcement de l'armature de carcasse qui est constitué de portions d'éléments de renforcement 17. A leurs extrémités radialement inférieures, les portions d'éléments de renforcement 17 forment des boucles 18 juxtaposées, situées dans le bourrelet 4. Ces boucles 18 sont adjacentes et ne se chevauchent pas. De part et d'autre axialement de l'alignement circonférentiel 6 des éléments de renforcement de l'armature de carcasse, sont représentées seulement les piles 11 et 12, d'éléments de renforcement orientés circonférentiellement, directement adjacentes à cet alignement 6. Pour la clarté du dessin, seul l'alignement circonférentiel 6 d'éléments de renforcement et deux piles ont été représentés, mais, l'alignement circonférentiel 7 d'éléments de renforcement de l'armature de carcasse présente la même disposition des portions de renforts 17.

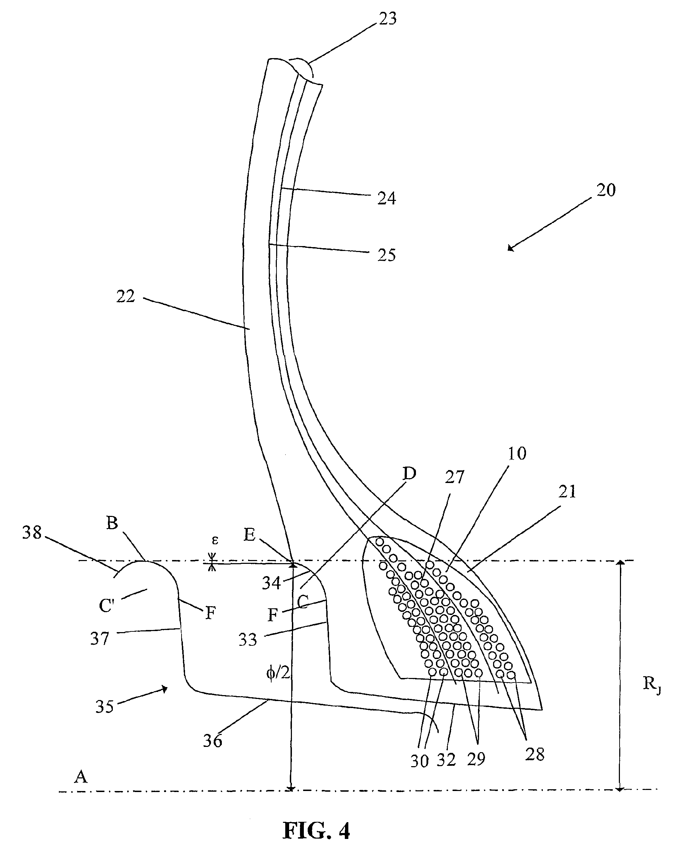

La figure 4 illustre un bourrelet 21 et un flanc 22 d'un second mode de réalisation d'un pneumatique 20 selon l'invention dans lequel l'armature de carcasse 23 est constituée de deux alignements circonférentiels, 24, 25 d'éléments de renforcement en polyamide aromatique ou aramide. Dans le bourrelet 21 sont disposées des piles 27 de câbles d'orientation circonférentielle. Ces piles 27 sont ici séparées en trois groupes. On trouve successivement axialement du côté intérieur du bourrelet vers le côté extérieur, deux piles 28 disposées intérieurement relativement à l'alignement circonférentiel d'éléments de renforcement de l'armature de carcasse 24, trois piles 29 disposées entre les alignements circonférentiels d'éléments de renforcement de l'armature de carcasse 24 et 25, et deux piles 30 disposées extérieurement relativement à l'alignement circonférentiel d'éléments de renforcement de l'armature de carcasse 25.

Comme précédemment, le nombre de spires de câbles orientés circonférentiellement est tel que l'on vérifie que la somme des rigidités d'extension des piles disposées extérieurement relativement à l'armature de carcasse est sensiblement du même ordre que la somme des rigidités d'extension des piles disposées intérieurement relativement à l'armature de carcasse 23.

La surface extérieure du bourrelet 21 comprend un siège 32, une paroi tronconique d'orientation sensiblement radiale 33 adjacente radialement intérieurement à une paroi 34 dont la section est un arc de cercle EF de centre C. C est disposé à l'extérieur du bourrelet 21. En considérant la ligne CD qui traverse le bourrelet en faisant un angle $\alpha = +45 \pm 5$ degrés relativement à l'axe de rotation A du pneumatique (cet angle est déterminé lorsque le pneumatique est monté sur sa jante), on constate que l'ensemble des éléments de renforcement orientés circonférentiellement 27 est disposé à une distance radiale de l'axe A inférieure ou égale à cette ligne CD. Cette ligne CD définit sensiblement une zone d'encastrement très rigide où les déformations sont très réduites et une zone de flexion radialement au-dessus de CD. Le fait que tous les éléments de renforcement orientés circonférentiellement se trouvent dans la zone d'encastrement renforce l'endurance du bourrelet.

Cette surface extérieure du bourrelet est destinée à venir s'appuyer contre la paroi d'une jante 35 dont le profil extérieur est aussi représenté sur la figure 4. Ce profil comprend le siège 36 et la paroi sensiblement radiale du crochet 37 suivie du rebord 38. Le rebord 38 a une section droite en arc de cercle de centre C'. Le point de diamètre le plus élevé est B, de rayon $R_J$. Le point E disposé sur la surface axialement extérieure du bourrelet 21 est destiné à venir en contact avec sensiblement le point B. Lorsque le pneumatique est monté sur la jante 35, les surfaces 34 et 38 sont homocentriques, c'est-à-dire que leurs centres C et C' sont confondus. Le point E est disposé sur une circonférence de diamètre Φ. On a la relation :

$$\Phi = 2(R_J - \varepsilon)$$

avec s compris entre 0,5 et 2 mm.

Ce léger décalage du point E entre sa position libre et sa position montée sur la jante, en contact avec B, permet au bourrelet d'être légèrement mis en extension lors de son montage sur la jante et favorise la qualité du contact obtenu. Ce contact jusqu'au point E renforce la stabilité du bourrelet lors de la mise en pression du pneumatique et lors du passage dans l'aire de contact en service. En conséquence, on constate que les alignements circonférentiels de l'armature de carcasse sont nettement moins sollicités en compression lors du passage dans l'aire de contact contrairement à ce qui se passe pour des pneumatiques d'avion d'architecture classique.

Sur la figure 1 est aussi présenté un premier exemple d'armature de sommet 14. Celle-ci est constituée d'un bloc de travail comportant deux couches d'éléments de renforcement 15 et 16 d'orientation sensiblement circonférentielle obtenues par enroulement hélicoïdal d'au moins un élément de renforcement. Le nombre de couches de renfort ainsi que le pas de pose sont adaptés en fonction de la dimension du pneumatique et de ses conditions d'utilisation. Ce mode de réalisation d'une armature de sommet a l'avantage de procurer un frettage très efficace qui minimise la variation des dimensions du pneumatique lors du gonflage ainsi qu'à haute vitesse. On constate que l'évolution du profil peut être trois à quatre fois plus faible que pour un pneumatique d'avion usuel tel un 30x8.8R15 AIRX. Cet excellent frettage a aussi l'avantage de ne pas mettre en forte extension les mélanges constituant la bande de roulement du sommet du pneumatique. Les fissurations en surface de la bande de roulement dues à l'ozone présente dans l'air sont fortement réduites.

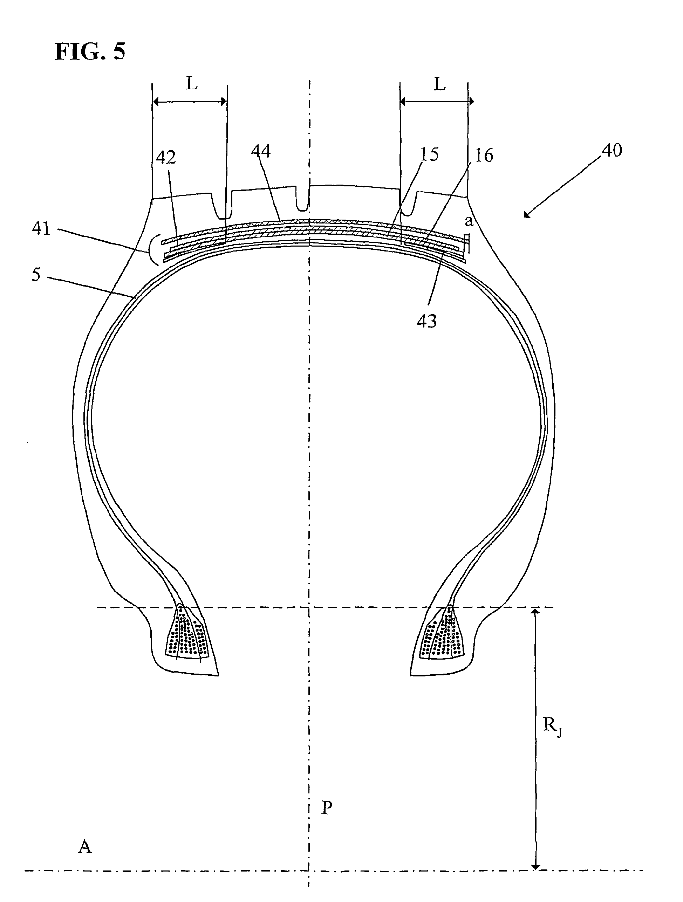

L'armature de sommet 41 du pneumatique 40 présenté sur la figure 5 comporte comme précédemment deux couches d'éléments de renforcement d'orientation sensiblement circonférentielle 15 et 16 et est complétée par deux couches 42 et 43 d'éléments de renforcement, orientés sensiblement circonférentiellement disposées axialement de part et d'autre du plan médian du pneumatique dans les zones latérales du sommet. Elles permettent de renforcer le frettage des zones latérales L du sommet. Les couches 42 et 43 sont disposées radialement entre les couches 15 et 16 et l'armature de carcasse 5.

L'armature 41 est aussi complétée par une couche sommet de protection 44 disposée radialement extérieurement relativement aux autres couches de l'armature de sommet 41. Cette couche sommet de protection peut être constituée d'éléments de renforcement métalliques ondulés pour ne pas être sollicités en fonctionnement normal. Il est à noter que cette couche de protection s'étend axialement au-delà des couches 15 et 16 de part et d'autre du plan médian P du pneumatique d'une distance axiale a.

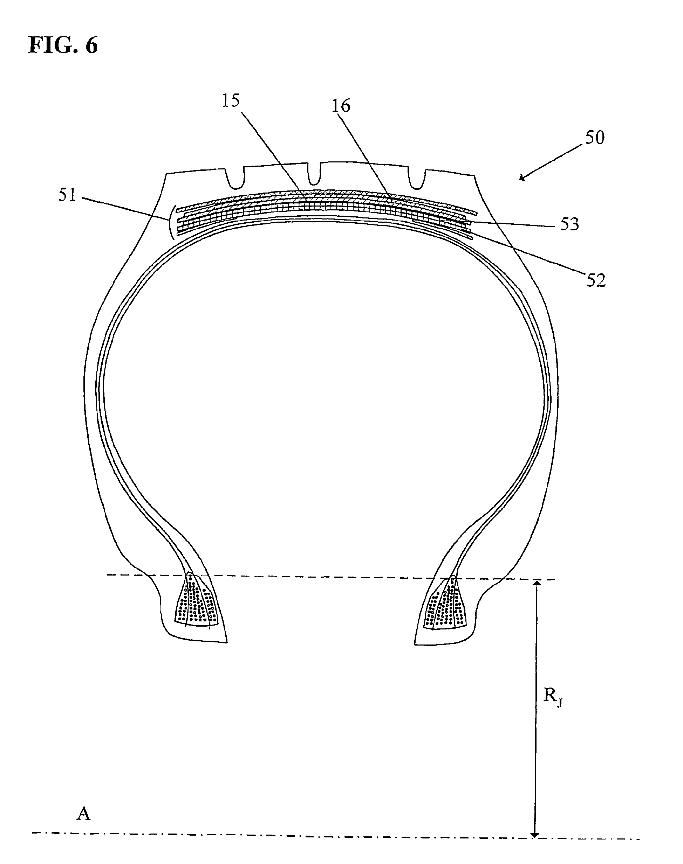

La figure 6 présente un pneumatique 50 avec une armature de sommet 51 comportant en plus deux couches 52, 53 d'éléments de renforcement, parallèles entre eux dans chaque couche et croisés d'une couche à la suivante en faisant avec la direction circonférentielle un angle $\alpha$, compris entre 5° et 35°. Ces deux couches sont disposées radialement en dessous des couches d'éléments de renforcement circonférentiels 15 et 16. Elles augmentent la poussée de dérive du pneumatique 30 relativement à celle du pneumatique 40.

On a testé un pneumatique selon l'invention de dimension 30x8.8 R 15 comportant :

- comme annature de carcasse deux alignements circonférentiels d'éléments de renforcement;
- comme câbles orientés circonférentiellement des câbles d'acier tels que ceux décrits sur la figure 2, de formule 9.35, et répartis en 7 piles 27 (comme illustrées sur la figure 4) :

  • 2 piles axialement les plus intérieures avec 12 et 15 spires,
  • 3 piles entre les alignements circonférentiels 24 et 25 avec 17, 14 et 16 spires,
  • 2 piles axialement les plus extérieures avec 11 et 7 spires.

- une armature de sommet avec deux couches d'éléments de renforcement orientés sensiblement circonférentiellement constitués de retors.

La couche de mélange de très haut module d'élasticité avait un module sécant d'extension de 45 MPa et une dureté shore A de 90.

Ce pneumatique a subi des tests de résistance à l'éclatement et les pressions maximales mesurées ont été de l'ordre de 58 bars. Il est aussi caractérisé par un taux d'allongement de son développement entre la pression nulle et sa pression de service de 15 bars de l'ordre de 1,5 %. Ce pneumatique a aussi subi avec succès des tests de décollage similaires aux tests normalisés pour l'homologation des pneumatiques pour avion.

La confection du pneumatique selon l'invention peut avantageusement être réalisée sur un noyau rigide imposant la forme de sa cavité intérieure, tels ceux décrits par EP 242 840 ou EP 822 047, incorporés par référence dans la présente demande. On applique sur ce noyau, dans l'ordre requis par l'architecture finale, tous les constituants du pneumatique, qui sont disposés directement à leur place finale, sans subir de conformation à aucun moment de la confection. La cuisson s'effectue sur noyau, celui-ci n'étant retiré qu'après la phase de vulcanisation.

Ce mode de fabrication a l'avantage de réduire fortement voire d'éliminer les précontraintes imposées aux renforts, particulièrement à ceux orientés à 0°, lors des phases traditionnelles de conformation

On peut aussi refroidir partiellement le bandage sur le noyau pour maintenir les éléments de renforcement dans l'état de déformation imposé lors de la pose.

On peut aussi, de manière équivalente, fabriquer le pneumatique sur un tambour tel que décrit dans WO 97/47 463 ou EP 0 718 090, à condition de faire la confirmation de l'ébauche du pneumatique avant d'effectuer la pose des câbles orientés circonférentiellement.

On peut encore réaliser la pose des câbles orientés circonférentiellement sur une forme à la géométrie identique à la forme visée dans le moule de cuisson. Le bloc sommet est ensuite assemblé avec l'ébauche complémentaire du pneumatique suivant des techniques de transfert connues de l'homme de l'art, puis, toujours suivant des principes connus, le pneumatique est emboîté et mis sous pression par déploiement d'une membrane à l'intérieur du pneumatique.

Ce mode de réalisation garantit aussi l'absence de précontraintes dues à la conformation en presse de vulcanisation.

Quel que soit le mode de fabrication choisie, il apparaît que le choix des câbles selon l'invention posés selon une orientation circonférentielle dans la zone du bourrelet pour assurer l'ancrage des éléments de renforcement de l'armature de carcasse permet d'améliorer les rendements de fabrication ; en effet, le choix de ces câbles autorise un accrochage lors de leur pose à crû suffisant pour qu'ils ne risquent pas de se détacher ou simplement se déplacer avant la phase de cuisson.

## Revendications

1. Pneumatique d'avion (1), dont la pression de gonflage est supérieure à 9 bars et dont la flèche est supérieure à 30%, comprenant un sommet (2), deux flancs (3) et deux bourrelets (4), une armature de carcasse (5) ancrée dans les deux bourrelets et une armature de sommet (14), dans lequel l'armature de carcasse comprend au moins un alignement circonférentiel (6,7) d'éléments de renforcement et dans lequel les moyens d'ancrage (9) desdits éléments de renforcement dans chaque bourrelet comprennent des éléments de renforcement orientés circonférentiellement bordant axialement lesdits alignements circonférentiels desdits éléments de renforcement de l'armature de carcasse, lesdits éléments de renforcement de l'armature de carcasse et lesdits éléments de renforcement orientés circonférentiellement étant séparés par un mélange caoutchouteux de liaison (10) de très haut module d'élasticité, **caractérisé en ce que** lesdits éléments de renforcement orientés circonférentiellement sont des câbles, **en ce que** lesdits câbles présentent une aptitude à la pénétration comprise entre 80 et 100%, **en ce que** la force rupture des câbles est supérieure à 150 daN et **en ce que** lesdits câbles présentent un allongement à la rupture supérieur à 4%.

2. Pneumatique d'avion selon la revendication 1, **caractérisé en ce que** la force rupture des câbles orientés circonférentiellement est inférieure à 400 daN.

3. Pneumatique d'avion selon la revendication 1 ou 2, **caractérisé en ce que** l'allongement à la rupture des câbles orientés circonférentiellement est inférieur à 8%.

4. Pneumatique d'avion selon l'une des revendications précédentes, **caractérisé en ce que** lesdits câbles orientés circonférentiellement desdits moyens d'ancrage sont constitués de fils choisis dans le groupe des renforts de carbone, de tungstène, d'aramide haut module ou d'acier.

5. Pneumatique d'avion selon l'une des revendications 1 à 3, les câbles orientés circonférentiellement étant métalliques, **caractérisé en ce que** lesdits câbles orientés circonférentiellement sont traités thermiquement.

6. Pneumatique d'avion selon l'une des revendications précédentes, **caractérisé en ce que** la surface des câbles orientés circonférentiellement comporte un revêtement adhérisant, tel qu'un revêtement en laiton.

7. Pneumatique d'avion selon l'une des revendications précédentes, **caractérisé en ce que** chaque alignement circonférentiel (6,7) desdits éléments de renforcement de l'armature de carcasse est, dans chaque bourrelet, bordé axialement intérieurement et axialement extérieurement par lesdits câbles orientés circonférentiellement.

8. Pneumatique d'avion selon l'une des revendications, **caractérisé en ce que**, en considérant $\Sigma RI$ somme des rigidités d'extension des seconds renforts (12) disposés axialement intérieurement relativement à l'armature de carcasse et en considérant $\Sigma RE$ somme des rigidités d'extension des seconds renforts (11,13) disposés à l'extérieur de l'armature de carcasse, on a :

$$0,6 \leq \frac{\sum R_I}{\sum R_E} \leq 1,5$$

9. Pneumatique d'avion selon la revendication 8, **caractérisé en ce que** :

$$0,7 \leq \frac{\sum R_I}{\sum R_E} \leq 1,3$$

10. Pneumatique d'avion selon l'une des revendications précédentes, dans lequel, la surface extérieure des bourrelets comprenant un siège (32), une paroi tronconique d'orientation sensiblement radiale (33) adjacente radialement intérieurement à une paroi (34) dont la section est un arc de cercle (EF) de centre (C) et en considérant une ligne (CD) traversant le bourrelet (21) en faisant un angle $\alpha = +45\pm5$ degrés

relativement à l'axe de rotation (A) du pneumatique, **caractérisé en ce que** chacun des câbles orientés circonférentiellement (27) est disposé à une distance radiale de l'axe de rotation (A) inférieure à la distance radiale d'un point de ladite ligne (CD), ledit point étant radialement aligné avec le câble considéré.

11. Pneumatique d'avion selon l'une des revendications précédentes, dans lequel, ledit bourrelet (21) ayant une surface extérieure destinée à venir en contact avec la surface correspondante du siège (36) et du crochet (37) de ladite jante (35), après montage sur ladite jante et gonflage dudit pneumatique, **caractérisé en ce que** la zone de contact entre ladite surface extérieure dudit bourrelet et ladite jante s'étend au moins jusqu'au point (B) du crochet de rayon maximum (RJ).

12. Pneumatique d'avion selon la revendication 11, dans lequel, ($\Phi$) étant le diamètre de la circonférence de la surface extérieure du bourrelet destinée à venir s'appuyer contre la circonférence du crochet de la jante de rayon maximum (RJ), **caractérisé en ce qu'**on a :

$$\Phi = 2(R_J - \varepsilon)$$

avec $\varepsilon$ compris entre 0,5 et 2 mm.

13. Pneumatique d'avion selon l'une des revendications précédentes, **caractérisé en ce que** lesdits éléments de renforcement (17) de l'armature de carcasse forment des allers et retours disposés de façon adjacente, et **en ce qu'**au niveau de chaque bourrelet, des boucles (18) relient chaque fois un aller à un retour.

14. Pneumatique d'avion selon l'une des revendications précédentes, **caractérisé en ce que** l'armature de sommet (14) comprend au moins un bloc de travail avec au moins deux couches (15,16) d'éléments de renforcement parallèles dans chaque couche, orientés sensiblement circonférentiellement.

15. Pneumatique d'avion selon la revendication 14, dans lequel, ledit sommet comprenant une zone centrale et deux zones latérales, **caractérisé en ce que** ledit bloc de travail comprend en plus au moins deux couches (42,43) d'éléments de renforcement de haut module d'élasticité, orientés sensiblement circonférentiellement, disposées axialement de part et d'autre du plan médian du pneumatique dans les zones latérales dudit sommet.

16. Pneumatique d'avion selon la revendication 15, **ca-**

**ractérisé en ce que** lesdites deux couches (42,43) dudit bloc de travail sont disposées radialement sous lesdites deux couches (15,16) d'éléments de renforcement orientés circonférentiellement dudit bloc de travail.

17. Pneumatique d'avion selon l'une des revendications 14 à 16, **caractérisé en ce que** ledit bloc de travail comprend en plus au moins deux couches (52,53) d'éléments de renforcement, parallèles entre eux dans chaque couche et croisés d'une couche à la suivante en faisant avec la direction circonférentielle un angle (α), compris entre 5° et 35°.

18. Pneumatique d'avion selon l'une des revendications 14 à 17, **caractérisé en ce que** ladite armature de sommet comprend en plus, disposé radialement extérieurement relativement audit bloc de travail, une couche de protection (44) s'étendant axialement au-delà de la largeur axiale de ladite ou desdites couches (15,16) d'éléments de renforcement d'orientation circonférentielle.

19. Pneumatique d'avion selon l'une des revendications précédentes, **caractérisé en ce que** le mélange caoutchouteux de liaison (10) de très haut module d'élasticité a un module sécant d'extension à 10 % supérieur à 20 MPa et de préférence supérieur à 30 MPa.

20. Pneumatique d'avion selon l'une des revendications précédentes, **caractérisé en ce que** le mélange caoutchouteux de liaison (10) de très haut module d'élasticité a une dureté shore A supérieure à 70.

**Claims**

1. An aircraft tyre (1), the inflation pressure of which is greater than 9 bar and the deflection of which is greater than 30%, comprising a crown (2), two sidewalls (3) and two beads (4), a carcass reinforcement (5) anchored in the two beads and a crown reinforcement (14), in which the carcass reinforcement comprises at least one circumferential alignment (6, 7) of reinforcement elements and in which the means of anchoring (9) said reinforcement elements within each bead comprise circumferentially oriented reinforcement elements axially bordering said circumferential alignments of said reinforcement elements of the carcass reinforcement, said reinforcement elements of the carcass reinforcement and said circumferentially oriented reinforcement elements being separated by a bonding rubber mix (10) of very high elasticity modulus, **characterised in that** said circumferentially oriented reinforcement elements are cables, **in that** said cables have a penetrability of between 80 and 100%, **in that** the breaking load of the cables is greater than 150 daN and **in that** said cables have an elongation at break greater than 4%.

2. An aircraft tyre according to Claim 1, **characterised in that** the breaking load of the circumferentially oriented cables is less than 400 daN.

3. An aircraft tyre according to Claim 1 or 2, **characterised in that** the elongation at break of the circumferentially oriented cables is less than 8%.

4. An aircraft tyre according to one of the preceding claims, **characterised in that** said circumferentially oriented cables of said anchoring means are formed of cords selected from among the group consisting of carbon, tungsten, high-modulus aramid or steel reinforcing threads.

5. An aircraft tyre according to one of Claims 1 to 3, the circumferentially oriented cables being metal ones, **characterised in that** said circumferentially oriented cables are heat-treated.

6. An aircraft tyre according to according to one of the preceding claims, **characterised in that** the surface of the circumferentially oriented cables comprises an adherent coating, such as a brass coating.

7. An aircraft tyre according to according to one of the preceding claims, **characterised in that** each circumferential alignment (6, 7) of said reinforcement elements of the carcass reinforcement, within each bead, is bordered axially internally and axially externally by said circumferentially oriented cables.

8. An aircraft tyre according to claim 7, **characterised in that**, considering $\Sigma R_I$ as being the total of the rigidities of extension of the second reinforcing threads (12) arranged axially internally relative to the carcass reinforcement, and considering $\Sigma R_E$ as being the total of the rigidities of extension of the second reinforcing threads (11, 13) arranged axially externally relative to the carcass reinforcement, then:

$$0.6 \leq \frac{\sum R_I}{\sum R_E} \leq 1.5$$

9. An aircraft tyre according to Claim 8, **characterised in that**:

$$0.7 \le \frac{\sum R_I}{\sum R_E} \le 1.3$$

10. An aircraft tyre according to one of the preceding claims, in which, the outer surface of the beads comprising a seat (32), a frustoconical wall of substantially radial orientation (33) adjacent radially internally to a wall (34) the section of which is an arc of a circle (EF) of centre (C), and considering a line (CD) passing through the bead (21), forming an angle $\alpha$ = +45 $\pm$ 5 degrees relative to the axis of rotation A of the tyre, **characterised in that** all the circumferentially oriented cables are arranged at a radial distance from the axis of rotation (A) less than or equal to the distance of a point of said line (CD), said point being aligned with the considered cable.

11. An aircraft tyre according to one of the preceding claims, in which, said bead (21) having an outer surface intended to come into contact with the corresponding surface of the seat (36) and of the hook (37) of said rim (35), after mounting on said rim and inflation of said tyre, **characterised in that** the contact zone between said outer surface of said bead and said rim extends at least as far as point (B) of the hook of maximum radius ($R_J$).

12. An aircraft tyre according to Claim 11, in which, ($\Phi$) being the diameter of the circumference of the outer surface of the bead intended to come to bear against the circumference of the hook of the rim of maximum radius ($R_J$), **characterised in that**:

$$\Phi = 2(R_J - \varepsilon)$$

with $\varepsilon$ being between 0.5 and 2 mm.

13. An aircraft tyre according to one of the preceding claims, **characterised in that** said reinforcement elements (17) of the carcass reinforcement form forward and return paths arranged adjacently, and **in that** at the level of each bead, loops(18) connect one forward path to one return path each time.

14. An aircraft tyre according to one of the preceding claims, **characterised in that** the crown reinforcement (14) comprises at least one working block with at least two layers (15, 16) of reinforcement elements which are parallel in each layer, oriented substantially circumferentially.

15. An aircraft tyre according to Claim 14, in which, said crown comprising a central zone and two lateral zones, **characterised in that** said working block furthermore comprises at least two layers (42, 43) of substantially circumferentially oriented reinforcement elements of high elasticity modulus, arranged axially on either side of the median plane of the tyre in the lateral zones of said crown.

16. An aircraft tyre according to Claim 15, **characterised in that** said two layers (42, 43) of said working block are arranged radially beneath said two layers (15, 16) of circumferentially oriented reinforcing elements of said working block.

17. An aircraft tyre according to one of Claims 14 to 16, **characterised in that** said working block further comprises at least two layers (52, 53) of reinforcement elements, which elements are parallel to each other in each layer and crossed from one layer to the next, forming an angle ($\alpha$), of between 5° and 35°, with the circumferential direction.

18. An aircraft tyre according to one of Claims 14 to 17, **characterised in that** said crown reinforcement furthermore comprises, arranged radially externally relative to said working block, a protective layer (44) extending axially beyond the axial width of said layer or layers (15, 16) of reinforcement elements of circumferential orientation.

19. An aircraft tyre according to one of the preceding claims, **characterised in that** the bonding rubber mix (10) of very high elasticity modulus has a secant modulus of extension at 10% greater than 20 MPa and preferably greater than 30 MPa.

20. An aircraft tyre according to one of the preceding claims, **characterised in that** the bonding rubber mix (10) of very high elasticity modulus has a Shore A hardness greater than 70.

**Patentansprüche**

1. Flugzeugreifen (1), dessen Luftdruck höher als 9 Bar und dessen Einfederung höher als 30% ist, mit einem Scheitel (2), mit zwei Flanken (3) und zwei Wülsten (4), mit einer in den zwei Wülsten verankerten Karkassenbewehrung (5) und mit einer Scheitelbewehrung (14), wobei die Karkassenbewehrung mindestens eine Umfangsanordnung (6, 7) von Verstärkungselementen enthält und wobei die Verankerungseinrichtungen (9) der Verstärkungselemente in jedem Wulst in Umfangsrichtung ausgerichtete Verstärkungselemente enthalten, die axial die Umfangsanordnungen der Verstärkungselemente der Karkassenbewehrung umranden, wobei die Verstärkungselemente der Karkassenbewehrung und die in Umfangsrichtung ausgerichteten Verstärkungselemente durch eine Verbindungskautschukmischung (10) mit sehr hohem Elastizitätsmodul getrennt werden, **dadurch gekennzeichnet, dass** die in Umfangsrichtung ausgerichteten Verstärkungselemente Kabel sind, dass die Kabel eine Eindringfähigkeit zwischen 80 und 100% haben, dass die Reißkraft der Kabel höher ist als 150 daN, und dass die Kabel eine Reißdehnung von mehr als 4% haben.

2. Flugzeugreifen nach Anspruch 1, **dadurch gekennzeichnet, dass** die Reißkraft der in Umfangsrichtung ausgerichteten Kabel geringer als 400 daN ist.

3. Flugzeugreifen nach Anspruch 1 oder 2, **dadurch gekennzeichnet, dass** die Reißdehnung der in Umfangsrichtung ausgerichteten Kabel geringer als 8% ist.

4. Flugzeugreifen nach einem der vorhergehenden Ansprüche, **dadurch gekennzeichnet, dass** die in Umfangsrichtung ausgerichteten Kabel der Verankerungseinrichtungen aus Fäden bestehen, die aus der Gruppe der Verstärkungen aus Kohlenstoff, Wolfram, Hochmodul-Aramid oder Stahl ausgewählt werden.

5. Flugzeugreifen nach einem der Ansprüche 1 bis 3, wobei die in Umfangsrichtung ausgerichteten Kabel metallisch sind, **dadurch gekennzeichnet, dass** die in Umfangsrichtung ausgerichteten Kabel wärmebehandelt werden.

6. Flugzeugreifen nach einem der vorhergehenden Ansprüche, **dadurch gekennzeichnet, dass** die Oberfläche der in Umfangsrichtung ausgerichteten Kabel eine haftende Beschichtung wie eine Messingbeschichtung aufweist.

7. Flugzeugreifen nach einem der vorhergehenden Ansprüche, **dadurch gekennzeichnet, dass** jede Umfangsanordnung (6, 7) der Verstärkungselemente der Karkassenbewehrung in jedem Wulst axial innen und axial außen von den in Umfangsrichtung ausgerichteten Kabeln umrandet wird.

8. Flugzeugreifen nach einem der vorhergehenden Ansprüche, **dadurch gekennzeichnet, dass**, indem ΣRI als Summe der Dehnungssteifigkeiten der zweiten Verstärkungen (12) angenommen wird, die axial innen bezüglich der Karkassenbewehrung angeordnet sind, und indem ERE als Summe der Dehnungssteifigkeiten der zweiten Verstärkungen (11, 13) angenommen wird, die außerhalb der Karkassenbewehrung angeordnet sind, gilt:

$$0,6 \leq \frac{\sum R_I}{\sum R_E} \leq 1,5$$

9. Flugzeugreifen nach Anspruch 8, **dadurch gekennzeichnet, dass** gilt:

$$0,7 \leq \frac{\sum R_I}{\sum R_E} \leq 1,3$$

10. Flugzeugreifen nach einem der vorhergehenden Ansprüche, wobei die Außenfläche der Wülste einen Sitz (32) und eine kegelstumpfförmige Wand (33) mit im Wesentlichen radialer Ausrichtung enthält, die radial innen einer Wand (34) benachbart ist, deren Querschnitt ein Kreisbogen (EF) mit der Mitte (C) ist, und bei Betrachtung einer Linie (CD), die den Wulst (21) durchquert, indem sie einen Winkel $\alpha = +45 \pm 5$ Grad bezüglich der Drehachse (A) des Reifens bildet, **dadurch gekennzeichnet, dass** jedes der in Umfangsrichtung ausgerichteten Kabel (27) in einem radialen Abstand zur Drehachse (A) geringer als der radiale Abstand eines Punkts der Linie (CD) angeordnet ist, wobei der Punkt mit dem betrachteten Kabel radial fluchtend angeordnet ist.

11. Flugzeugreifen nach einem der vorhergehenden Ansprüche, wobei der Wulst (21) eine Außenfläche hat, die dazu bestimmt ist, mit der entsprechenden Fläche des Sitzes (36) und der Nutpartie (37) der Felge (35) nach der Montage auf die Felge und dem Aufpumpen des Luftreifens in Kontakt zu kommen, **dadurch gekennzeichnet, dass** die Kontaktzone zwischen der Außenfläche des Wulsts und der Felge sich mindestens bis zu dem Punkt (B) der Nutpartie mit dem maximalen Radius (RJ) erstreckt.

12. Flugzeugreifen nach Anspruch 11, wobei ($\Phi$) der Durchmesser des Umfangs der Außenfläche des Wulsts ist, die dazu bestimmt ist, sich gegen den Umfang der Nutpartie der Felge mit dem größten Radius (RJ) anzulegen, **dadurch gekennzeichnet, dass** gilt:

$$\Phi = 2(R_J - \varepsilon)$$

mit $\varepsilon$ zwischen 0,5 und 2 mm.

13. Flugzeugreifen nach einem der vorhergehenden Ansprüche, **dadurch gekennzeichnet, dass** die Verstärkungselemente (17) der Karkassenbewehrung Hin- und Rückwege formen, die nebeneinander angeordnet sind, und dass in Höhe jedes Wulsts Schleifen (18) jedes Mal einen Hin- und einen Rückweg verbinden.

14. Flugzeugreifen nach einem der vorhergehenden Ansprüche, **dadurch gekennzeichnet, dass** die Scheitelbewehrung (14) mindestens einen Arbeitsblock mit mindestens zwei Schichten (15, 16) von in jeder Schicht parallelen Verstärkungselementen enthält, die im Wesentlichen in Umfangsrichtung ausgerichtet sind.

15. Flugzeugreifen nach Anspruch 14, wobei der Scheitel eine zentrale Zone und zwei seitliche Zonen enthält, **dadurch gekennzeichnet, dass** der Arbeitsblock außerdem mindestens zwei Schichten (42, 43) von Verstärkungselementen mit hohem Elastizitätsmodul enthält, die im Wesentlichen in Umfangsrichtung ausgerichtet und axial zu beiden Seiten der Mittelebene des Luftreifens in den seitlichen Zonen des Scheitels angeordnet sind.

16. Flugzeugreifen nach Anspruch 15, **dadurch gekennzeichnet, dass** die zwei Schichten (42, 43) des Arbeitsblocks radial unter den zwei Schichten (15, 16) von in Umfangsrichtung ausgerichteten Verstärkungselementen des Arbeitsblocks angeordnet sind.

17. Flugzeugreifen nach einem der Ansprüche 14 bis 16, **dadurch gekennzeichnet, dass** der Arbeitsblock außerdem mindestens zwei Schichten (52, 53) von Verstärkungselementen enthält, die in jeder Schicht parallel zueinander sind und sich von einer Schicht zur anderen kreuzen, indem sie mit der Umfangsrichtung einen Winkel ($\alpha$) bilden, der zwischen 5° und 35° liegt.

18. Flugzeugreifen nach einem der Ansprüche 14 bis 17, **dadurch gekennzeichnet, dass** die Scheitelbewehrung außerdem radial außen bezüglich des Arbeitsblocks angeordnet eine Schutzschicht (44) enthält, die sich axial jenseits der axialen Breite der Schicht(en) (15, 16) von in Umfangsrichtung ausgerichteten Verstärkungselementen erstreckt.

19. Flugzeugreifen nach einem der vorhergehenden Ansprüche, **dadurch gekennzeichnet, dass** die Verbindungskautschukmischung (10) mit sehr hohem Elastizitätsmodul einen Dehnungs-Sekantenmodul bei 10% höher als 20 MPa und vorzugsweise höher als 30 MPa hat.

20. Flugzeugreifen nach einem der vorhergehenden Ansprüche, **dadurch gekennzeichnet, dass** die Verbindungskautschukmischung (10) mit sehr hohem Elastizitätsmodul eine Shore-A-Härte von mehr als

70 hat.

**FIG. 1**

FIG. 2

FIG. 3

**FIG. 4**

## FIG. 5

**FIG. 6**

**EP 1 578 622 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0582196 A
- US 4832102 A
- WO 0200456 A
- EP 0751015 A
- WO 02085646 A

- FR 0209355
- EP 242840 A
- EP 822047 A
- WO 9747463 A
- EP 0718090 A